# FASCICULE DE BREVET EUROPEEN

(11) **EP 2 826 682 B1**
(45) Date de publication et mention de la délivrance du brevet: **01.01.2020**
(21) Numéro de dépôt: 14173030.9
(22) Date de dépôt: 18.06.2014
(51) Int. Cl.: B60T 11/16, B60T 11/236

(54) **PISTON PRIMAIRE DE MAÎTRE-CYLINDRE TANDEM**
PRIMÄRKOLBEN EINES TANDEM-HAUPTZYLINDERS
TANDEM MASTER CYLINDER PRIMARY PISTON

(30) Priorité: 27.06.2013 FR 1356175
(43) Date de publication de la demande: 21.01.2015
(73) Titulaire: ROBERT BOSCH GMBH, 70442 Stuttgart (DE)
(72) Inventeur: Grech, Daniel, 60260 Lamorlaye (FR); Lhuillier, Laurent, 93150 Blanc-Mesnil (FR); Rodriguez, Marc, Beverley Hills, MI 48025 (US)

(56) Documents cités:
- FR-A1- 2 969 085
- FR-A1- 2 969 087
- FR-A1- 2 969 090

## Description

### Domaine de l'invention

La présente invention se rapporte à un piston primaire de maître-cylindre tandem selon le préambule de la revendication 1.

### Etat de la technique

Il existe déjà selon l'état de la technique pris au sens général un piston primaire de maître-cylindre tandem composé d'un corps muni d'une jupe formant la surface extérieure du piston et ayant à l'arrière, côté tige poussoir, une cavité pour recevoir le piston plongeur relié à la tige poussoir et à l'avant, une cavité délimitant partiellement la chambre primaire et recevant le ressort de rappel et le guide ressort. La partie avant de la jupe correspondant à cette cavité est munie de perçages de mise en communication de la chambre primaire avec le réservoir de liquide de frein lorsque le piston primaire est en position de repos ; ces orifices sont coupés du réservoir lorsque le piston primaire est déplacé à partir de sa position de repos, en position active.

Le piston primaire coopère avec une gorge périphérique d'alimentation en liquide hydraulique. Cette gorge est réalisée dans l'alésage du maître-cylindre. Elle est bordée de part et d'autre par des joints appelés coupelles.

L'étanchéité entre le côté du piston primaire tourné vers la gorge d'alimentation et son côté tourné vers la chambre primaire est séparée par la coupelle primaire de pression. Lorsque le piston primaire est au repos, les orifices de la jupe sont en communication avec la gorge d'alimentation et ainsi avec le réservoir de liquide de frein. Mais dès que le piston primaire commence à être poussé en position active pour comprimer le liquide de frein dans la chambre primaire, les orifices passent au-delà de la coupelle primaire de pression de sorte que la communication entre la chambre primaire et la gorge d'alimentation est coupée. La pression commence alors à augmenter dans la chambre primaire sous l'effet du déplacement du piston primaire.

Pour éviter un blocage de pression occasionné notamment à une fréquence rapide, surtout si le maître cylindre est chaud produisant le collage de la coupelle de pression, le piston primaire a un petit orifice calibré, situé en arrière des orifices d'alimentation de la chambre primaire de sorte que lorsque le piston primaire est poussé en position active, cet orifice calibré ne passe pas sous la coupelle primaire et laisse la communication entre la chambre primaire et la gorge d'alimentation. Cet orifice calibré ne gêne pas la montée en pression dans la chambre primaire pour le freinage.

Ce piston primaire à l'inconvénient d'être d'une réalisation coûteuse, à la fois pour le perçage des orifices d'alimentation de la chambre primaire et la réalisation du petit orifice calibré. Il s'agit d'opérations différentes en plus de celles de la réalisation du piston primaire de base.

On connaît des pistons primaires en matière plastique munis d'un insert et dont l'avant est constitué par une couronne de rainures remplaçant les orifices mettant en communication la gorge d'alimentation avec le réservoir de frein pour relier la chambre primaire à la gorge d'alimentation.

Ainsi, le document FR 2 969 085 décrit un piston primaire en matière plastique, renforcé par un insert métallique en tôle emboutie. L'avant du piston primaire comporte des rainures formant des passages entre la chambre de pression et la chambre annulaire reliée au réservoir par un orifice.

Selon le document FR 2 969 087, on connaît un autre piston primaire de maître-cylindre tandem également réalisé en matière plastique avec un insert métallique et une couronne de rainures à l'avant du piston primaire. Cette couronne de rainures a la même fonction que celle du document présenté ci-dessus.

Enfin, selon le document FR 2 969 090, on connaît un autre piston primaire de maître-cylindre tandem également réalisé en matière plastique avec un insert en forme de coupelle métallique emboutie. L'avant de ce piston primaire comporte également des rainures ayant la même fonction que celle des pistons des deux documents ci-dessus.

### But de l'invention

La présente invention a pour but de développer un piston primaire économique permettant néanmoins d'éviter les blocages de pression.

### Exposé et avantages de l'invention

A cet effet, l'invention a pour objet un piston primaire de maître-cylindre tandem du type défini ci-dessus caractérisé en ce qu'il comporte au moins une rainure allongée au-delà de la coupelle de pression lorsque le piston passe en position active pour constituer un passage calibré mettant en communication la chambre primaire avec le réservoir de liquide hydraulique en cas de blocage de la chambre primaire sans créer de fuite de liquide de frein vers le réservoir pendant le freinage.

Le piston primaire selon l'invention à l'avantage d'être d'une fabrication extrêmement simple, réalisable par moulage par injection de matière plastique ou d'un alliage de métaux légers, par une seule opération. La forme débouchant des rainures de longueur normale et de la ou de quelques rainures allongées ne présente aucune difficulté de réalisation du moule. La précision du moulage permet de réaliser le passage calibré par la rainure allongée par rapport aux autres rainures du piston primaire.

Suivant une caractéristique avantageuse, les rainures sont des rainures droites parallèles à l'axe du piston.

Suivant une autre caractéristique avantageuse, le piston primaire est réalisé en une résine phénolique chargée notamment de fibres.

La résine phénolique a l'avantage d'être intéressante du point de vue économique permettant de réaliser un piston primaire peu coûteux. De plus, la résine phénolique a un coefficient de dilation thermique voisin de celui de l'aluminium qui est la matière généralement utilisée pour le corps du maître-cylindre.

Suivant une autre caractéristique de l'invention, le piston est réalisé en aluminium.

### Dessins

La présente invention sera décrite ci-après de manière plus détaillée à l'aide d'un exemple de réalisation d'un piston primaire selon l'invention représenté dans les dessins annexés dans lesquels :
- la figure 1 est une vue isométrique du piston primaire selon l'invention,
- la figure 2 est une vue de côté du piston,
- la figure 3 est une vue en coupe axiale agrandie du piston de la figure 2,
- Les figures 4A, 4B sont des vues en coupe axiale agrandies de l'extrémité avant de la jupe du piston primaire coopérant avec la coupelle de pression :

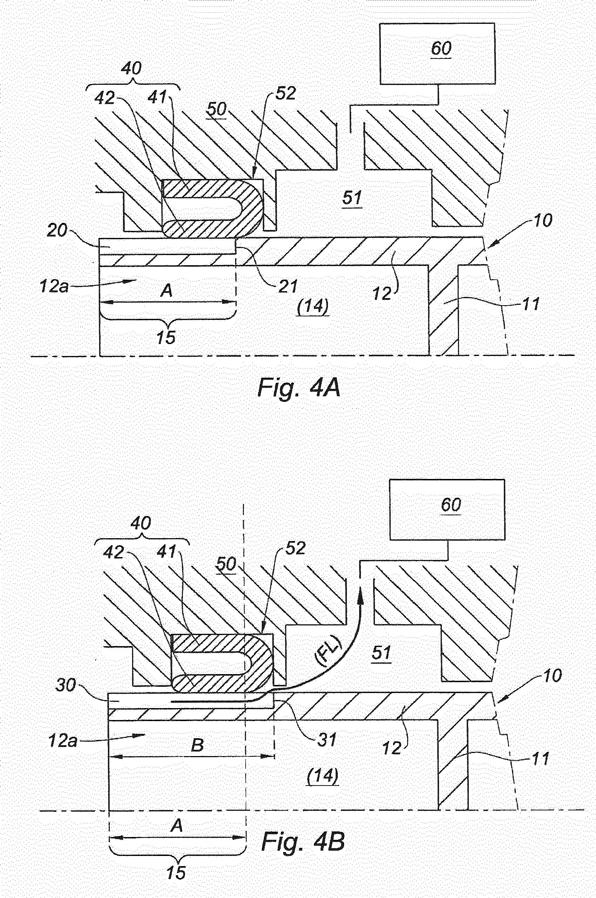

   * la figure 4A montre la coopération entre la coupelle de pression et une rainure de longueur A et
   * la figure 4B montre la coopération de la coupelle de pression avec une rainure allongée, de longueur B.

### Description d'un mode de réalisation de l'invention

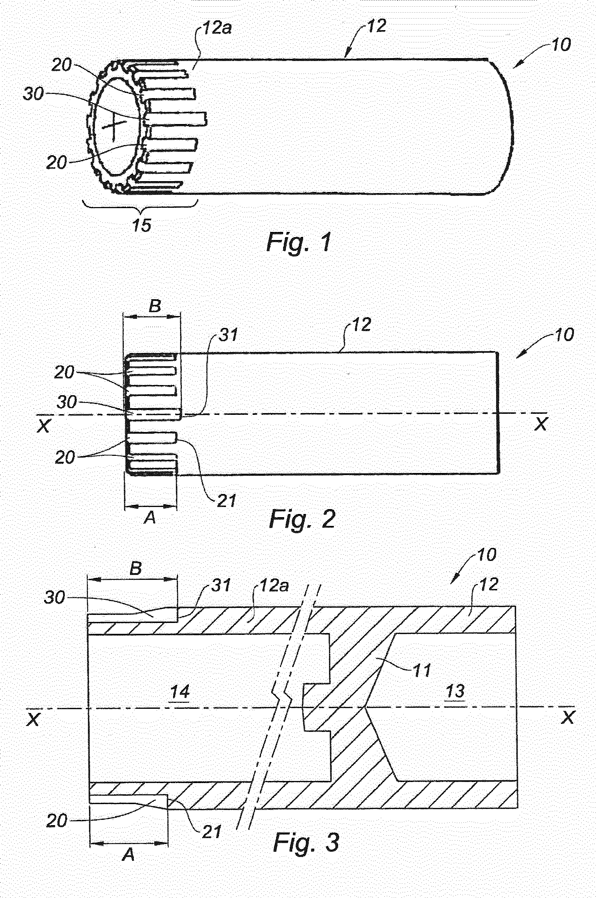

Selon les figures 1 à 3, l'invention a pour objet un piston primaire 10 formé d'un corps 11 muni d'une jupe 12 délimitant une cavité arrière 13 recevant le piston plongeur relié à la tige poussoir (non représentés), elle-même reliée à la pédale de frein, et une cavité avant 14 délimitant la chambre primaire dans l'alésage du maître-cylindre. Cette chambre avant 14 reçoit le ressort de rappel et le guide du ressort. Le ressort de rappel et son guide s'appuient d'un côté contre le fond de la cavité avant 14 du piston primaire 10 et l'autre côté contre le piston secondaire non représenté.

Ces différents composants d'un maître cylindre connu ne sont pas représentés.

L'avant 12A de la jupe du piston primaire 10 présente sur une couronne annulaire 15, un ensemble de rainures 20 s'étendant sur une longueur axiale (A) débouchant à l'avant de la jupe et fermées à l'arrière elles permettent la mise en communication de la chambre primaire avec le réservoir de liquide de frein lorsque le piston primaire 10 est au repos et elles coupent cette communication lorsque le piston primaire 10 commence à passer en position active pour générer la pression dans la chambre primaire.

En position de repos du piston primaire 10, l'extrémité arrière 31 des rainures 20 débouche dans la gorge d'alimentation du maître-cylindre, cette gorge communiquant elle-même avec le réservoir de liquide de frein. Dès que le piston primaire 10 est actionné et commence à passer en position active, les rainures 20 passent au-delà de la coupelle de pression qui délimite la gorge d'alimentation de sorte que la chambre primaire est coupée de l'alimentation, ce qui permet de créer la pression dans la chambre primaire.

Au moins l'une (30) des rainures 20 a une longueur axiale B dépassant légèrement la longueur axiale (A). Son extrémité arrière 31 est située au-delà de l'extrémité arrière 21 des autres rainures 20. Grâce à cette surlongeur (B-A), très faible, on réalise un passage calibré de sorte que cette rainure 30 communique toujours avec la gorge d'alimentation (pression atmosphérique) lorsque le piston primaire est en position active ou du moins est déplacé d'une certaine distance en position active. Ainsi, la surlongueur de cette rainure 30 crée un passage calibré permettant une lente réduction de la pression dans la chambre primaire en cas de retour sous pression occasionné par le collage éventuel de la coupelle de pression, produit par l'actionnement répété de la pédale de frein et notamment, avec un frein chaud. Cette ouverture calibrée ne gêne pas le fonctionnement normal du frein et ne crée pas une fuite de liquide de frein de la chambre primaire dans les conditions normales de fonctionnement du frein.

Le fonctionnement du piston primaire 10 selon l'invention sera explicité de manière plus détaillée à l'aide des figures 4A et 4B qui sont chacune une demi-coupe axiale du piston primaire 10 au niveau de la zone avant 12a de la jupe 12 montrant la coopération de cette zone avec la coupelle de pression 40 du corps 50 du maître cylindre. La coupe de la figure 4A est une coupe axiale passant par une rainure 20 alors que la coupe axiale de la figure 4B passe par la rainure 30. Seule est représentée la gorge périphérique 51 d'alimentation de la chambre primaire avec du liquide de frein lorsque les rainures 20 arrivent au niveau de cette gorge périphérique 51 relié au réservoir de liquide de frein 60.

Le joint ou coupelle de pression 40 est logé dans une gorge périphérique 52 du corps du maître cylindre tandem. Cette coupelle de pression à section en forme de U couché, s'appuie contre le fond 52 de la gorge périphérique 51 par l'une de ses branches et par l'autre branche 42, contre la surface extérieure de la jupe 12.

Avant le début du freinage, le piston 10 est déplacé vers la droite, de sorte que les rainures 20 viennent partiellement au-delà du joint de pression 40 et communiquent avec la gorge 51 remplit la chambre primaire avec du liquide de frein.

Au début de l'actionnement du frein, le piston primaire 10 est poussé vers la gauche de sorte qu'il arrive dans la position représentée aux figures 4A, 4B dans lesquelles la coupelle de pression 40 bouche les rainures 20 par sa branche 42. A ce moment, il n'y a plus de communication entre la chambre primaire (cavité 14) et la gorge périphérique 51. Le liquide de frein est emprisonné dans la chambre primaire et mis en pression.

Toutefois, pour éviter le blocage du maître cylindre par le collage de la coupelle de pression 40 ne permettant plus au liquide de frein en excédant de la chambre primaire de fuir vers la gorge périphérique 51, il est prévu selon l'invention (figure 4B), une rainure allongée 30, de longueur (B) légèrement supérieure à le longueur (A) des autres rainures 20 de sorte que cette rainure 30 communique au niveau de son extrémité 31 avec la gorge 51, puisque l'extrémité 31 n'est plus couverte par le joint de pression 40.

La différence de longueur (B-A) de la rainure allongée 30 réalise ainsi un orifice calibré 35 qui n'autorise qu'un très faible débit de liquide de frein pour supprimer la surpression du liquide de frein dans la chambre primaire et le collage de la coupelle de pression 40. Ce passage calibré 35 permet seulement un débit très réduit (FL) de liquide de frein sans commune mesure avec le débit de liquide de frein passant par des rainures 20 lorsque celles-ci sont dégagées. Ce débit extrêmement faible ne constitue pas une fuite gênante dans le fonctionnement normal du frein dans son action de freinage, c'est-à-dire dans sa mise en pression du liquide de frein dans la chambre primaire.

Le piston selon l'invention est avantageusement réalisé par injection en matière plastique. La matière plastique utilisable est une résine phénolique chargée notamment de fibres.

La résine phénolique a non seulement un avantage économique mais aussi celui d'avoir un coefficient de dilation thermique voisin de celui de l'aluminium qui est en général la matière dans laquelle est réalisé le corps du maître-cylindre.

Suivant une variante, le piston est réalisé en aluminium mais dans ce cas, l'intérêt économique est moindre que celui de la résine phénolique.

### NOMENCLATURE

- 10: Piston primaire
- 11: Corps du piston primaire
- 12: Jupe du piston primaire
- 12a: Zone avant de la jupe 12
- 13: Cavité arrière
- 14: Chambre avant
- 15: Couronne annulaire
- 20: Rainure de longueur axiale A
- 21: Extrémité arrière de la rainure 20
- 30: Rainure allongée de longueur axiale B
- 31: Extrémité arrière de la rainure 30
- 40: Coupelle de pression
- 41: Branche de la coupelle de pression
- 42: Branche de la coupelle de pression
- 50: Corps du maître cylindre
- 51: Gorge périphérique
- 60: Réservoir de liquide de frein
- 52: Fond de la gorge périphérique
- 210: Piston primaire connu
- 211: Corps
- 212: Jupe
- 213: Cavité
- 214: Cavité/Chambre primaire
- 220: Perçages
- 221: Orifice calibré

## Revendications

1. Piston primaire pour maître-cylindre tandem composé d'un corps (11) portant une jupe (12) dont l'avant (120) comporte une couronne extérieure annulaire (15) avec des rainures (20) s'étendant de l'extrémité avant de la jupe (12) sur une longueur axiale (A) tout en pouvant rester couvertes par la coupelle de pression (40) du maître-cylindre lorsque le piston (10) est en position active et débouchant au moins partiellement de l'autre côté de la coupelle de pression (40) du maître-cylindre lorsque le piston (10) est en position de repos, piston **caractérisé en ce qu'**il comporte au moins une rainure allongée de longueur axiale (B) supérieure à celle (A) des autres rainures (20) et pouvant dépasser ainsi au-delà de la coupelle de pression (40) lorsque le piston (10) passe en position active pour constituer un passage calibré mettant en communication la chambre primaire (14) du maître-cylindre avec un réservoir de liquide hydraulique (60), sans créer de fuite de liquide de frein vers le réservoir (60) gênant le freinage.

2. Piston primaire de maître-cylindre selon la revendication 1, **caractérisé en ce que** les rainures (20, 30) sont des rainures droites, parallèles à l'axe (xx) du piston (10).

3. Piston primaire de maître-cylindre selon la revendication 1, **caractérisé en ce qu'** il est réalisé en matière plastique.

4. Piston primaire de maître-cylindre selon la revendication 3, **caractérisé en ce que** la matière plastique est une résine phénolique chargée notamment de fibres.

5. Piston primaire de maître-cylindre selon la revendication 1, **caractérisé en ce qu'** il est réalisé en aluminium.

## Patentansprüche

1. Primärkolben für einen Tandem-Hauptzylinder, der durch einen Körper (11) gebildet wird, welcher einen Mantel (12) aufweist, dessen Vorderteil (120) einen äußeren ringförmigen Kranz (15) mit Nuten (20) umfasst, die sich von dem vorderen Ende des Mantels (12) über eine Axiallänge (A) erstrecken, wobei sie durch die Druckmanschette (40) des Hauptzylinders bedeckt bleiben, wenn sich der Kolben (10) in der aktiven Stellung befindet, und zumindest teilweise auf der anderen Seite der Druckmanschette (40) des Hauptzylinders münden, wenn sich der Kolben in der Ruhestellung befindet, wobei der Kolben **dadurch gekennzeichnet ist, dass** er mindestens eine längliche Nut mit einer Axiallänge (B) umfasst, die größer als die (A) der anderen Nuten (20) ist und sich somit über die Druckmanschette (40) hinaus erstrecken kann, wenn der Kolben (10) in die aktive Stellung gelangt, um einen kalibrierten Durchgang zu bilden, der die Primärkammer (14) des Hauptzylinders mit einem Hydraulikflüssigkeitsbehälter (60) verbindet, ohne ein Entweichen von Bremsflüssigkeit zu dem Behälter (60), was das Bremsen beeinträchtigt, zu erzeugen.

2. Primärkolben eines Hauptzylinders nach Anspruch 1, **dadurch gekennzeichnet, dass** die Nuten (20, 30) gerade Nuten parallel zur Achse (xx) des Kolbens (10) sind.

3. Primärkolben eines Hauptzylinders nach Anspruch 1, **dadurch gekennzeichnet, dass** er aus einem Kunststoffmaterial hergestellt ist.

4. Primärkolben eines Hauptzylinders nach Anspruch 3, **dadurch gekennzeichnet, dass** das Kunststoffmaterial ein insbesondere mit Fasern gefülltes Phenolharz ist.

5. Primärkolben eines Hauptzylinders nach Anspruch 1, **dadurch gekennzeichnet, dass** er aus Aluminium hergestellt ist.

## Claims

1. Tandem master cylinder primary piston composed of a body (11) carrying a skirt (12), the front (120) of which comprises an annular exterior crown (15) with grooves (20) extending on the front end of the skirt (12) over an axial length (A), it being possible for same to remain covered by the pressure cup (40) of the master cylinder when the piston (10) is in the active position and opening at least partially on the other side of the pressure cup (40) of the master cylinder when the piston (10) is in the rest position, the piston being **characterized in that** it comprises at least one elongate groove of axial length (B) greater than that (A) of the other grooves (20) and capable thus of extending beyond the pressure cup (40) when the piston (10) passes into the active position such as to constitute a calibrated passage placing the primary chamber (14) of the master cylinder in communication with a reservoir (60) of hydraulic liquid without creating an escape of brake liquid towards the reservoir (60), thereby adversely affecting braking.

2. Master cylinder primary piston according to Claim 1, **characterized in that** the grooves (20, 30) are straight grooves parallel to the axis (xx) of the piston (10).

3. Master cylinder primary piston according to Claim 1, **characterized in that** it is made from plastics.

4. Master cylinder primary piston according to Claim 3, **characterized in that** the plastics is a phenolic resin filled notably with fibres.

5. Master cylinder primary piston according to Claim 1, **characterized in that** it is made of aluminium.
